# Europäisches Patentamt
# European Patent Office
# Office européen des brevets

(19)

(11) Numéro de publication: **0 097 540**

**B1**

(12)

# FASCICULE DE BREVET EUROPÉEN

(45) Date de publication du fascicule du brevet:
29.04.87

(21) Numéro de dépôt: **83400962.3**

(22) Date de dépôt: **11.05.83**

(51) Int. Cl.⁴: **B 60 G 11/20,** B 60 G 21/04,
F 16 F 1/14

(54) **Suspension à bras oscillants pour un train de deux roues d'un véhicule et système de rappel élastique et de couplage anti-roulis pour une telle suspension.**

(30) Priorité: **15.06.82 FR 8210447**

(43) Date de publication de la demande:
**04.01.84 Bulletin 84/1**

(45) Mention de la délivrance du brevet:
**29.04.87 Bulletin 87/18**

(84) Etats contractants désignés:
**DE GB IT SE**

(56) Documents cité:
**FR-A-1 300 315**
**FR-A-2 154 297**
**FR-A-2 393 690**
**FR-A-2 413 231**
**US-A-2 043 542**

(73) Titulaire: **AEROSPATIALE Société Nationale
Industrielle, 37 boulevard de Montmorency,
F-75781 Paris Cédex 16 (FR)**

(72) Inventeur: **Aubry, Jacques Antoine, 2 avenue
Marie Gasquet Domaine du Lac Bleu, F-13480
Cabries (FR)**

(74) Mandataire: **Bonnetat, Christian, Cabinet PROPI
Conseils 23 rue de Léningrad, F-75008 Paris (FR)**

EP 0 097 540 B1

LIBER, STOCKHOLM 1987

## Description

La presente invention concerne une suspension pour un train de deux roues d'un vehicule. La suspension conforme à l'invention est tout particulièrement, quoique non exclusivement, appropriée à être utilisée comme suspension arrière d'un véhicule automobile du type à traction avant.

Par le brevet US-A-2 043 542, on connaît déjà une suspension pour un train de deux roues d'un véhicule comprenant deux bras oscillant autour d'un axe transversal audit véhicule et portant chacun l'une desdites roues, des moyens elastiques et des moyens amortisseurs étant associés auxdits bras respectivement pour contrecarrer et amortir les mouvements verticaux desdites roues, et lesdits moyens elastiques comportant un ensemble de deux tubes concentriques coaxiaux audit axe transversal d'oscillation des bras, lesdits bras étant solidaires des extrémités du tube extérieur et lesdites extrémités du tube extérieur pouvant tourner au moins de façon limitée autour dudit axe transversal. Dans cette suspension connue, lesdits tubes sont solidaires l'un de l'autre à leur extrémité et le tube extérieur est relié au châssis du véhicule au milieu de sa longueur. Il en résulte une réalisation compliquée, dans laquelle le tube intérieur remplit la seule fonction de barre anti-roulis.

La présente invention a pour objet de perfectionner la suspension du type mentionnée ci-dessus pour la rendre plus simple et plus performante.

A cette fin, selon l'invention, la suspension du type rappelé dans le préambule est caractérisée en ce que lesdits tubes sont chacun réalisés d'un seul tenant en matière composite fibres-matière synthetique et sont solidaires l'un de l'autre au voisinage du milieu de leur longueur, et en ce que le tube interieur est relié au châssis du véhicule par ses deux extrémités.

On voit ainsi que chacun des sous-ensembles constitués d'une moitié du tube extérieur et de la moitié correspondante du tube intérieur agit comme barre de torsion pour le bras auquel elle est reliée, tandis que le tube extérieur dudit ensemble agit comme moyen de couplage anti-roulis entre lesdits bras.

Par ailleurs, le fait de réaliser lesdits tubes intérieur et extérieur en matière composite fibres-résine synthétique permet d'obtenir pour ceux-ci des caractéristiques mécaniques correspondant aux fonctions qu'ils remplissent et qu'il serait impossible d'obtenir avec des tubes d'acier, à dimensionnement et poids comparables. Grâce à la présente invention on peut donc réaliser une suspension qui, tout en étant simple, est légère, de sorte qu'elle permet d'obtenir un gain sur le poids total du véhicule, et donc sur sa consommation en carburant. De préférence, lesdits tubes présentent une section polygonale. Il en est alors de même des bagues et pièces de liaison associées auxdits tubes.

Les extrémités du tube intérieur peuvent être ancrées directement dans le châssis du véhicule, alors que les extrémités du tube extérieur sont tourillonnées dans ledit châssis. Cependant, dans certains cas, notamment pour des raisons de confort des passagers du véhicule et de tenue de route de celui-ci, il peut être important que les roues puissent présenter un certain débattement longitudinal. Aussi, en variante, les extrémités du tube intérieur peuvent être reliées au châssis par l'intermédiaire d'étriers susceptibles de subir de légers déplacements oscillatoires de direction sensiblement parallèle à la direction longitudinale du véhicule, tandis que les extrémités du tube extérieur sont tourillonnées dans lesdits étriers.

Dans un mode de réalisation avantageux, chaque bras comporte un manchon transversal creux tourillonnant par rapport au châssis du véhicule ou par rapport auxdits étriers oscillants par l'intermédiaire de deux paliers espacés le long dudit axe transversal d'oscillation des bras et qui est traversé par l'une des extrémités dudit ensemble de tubes, l'extrémité correspondante du tube extérieur étant solidarisée dudit manchon, tandis que l'extrémité correspondante du tube intérieur est solidarisée du châssis ou de l'étrier.

Les différentes fixations et solidarisations peuvent être obtenues par friction et/ou collage.

La présente invention concerne également un système de rappel élastique et de couplage anti-roulis des deux roues d'un train de roues d'un véhicule équipé d'une suspension comprenant deux bras oscillant autour d'un axe transversal audit véhicule et portant chacun l'une desdites roues, ce système étant ramarquable en ce qu'il comporte un ensemble de deux tubes concentriques en matière composite fibres-résine synthétique et solidaires l'un de l'autre au voisinage du milieu de leur longueur. Un tel système peut être mis en oeuvre en fixant les extrémités du tube intérieur sur le châssis du véhicule ou sur l'étrier oscillant à débattement longitudinal et en solidarisant lesdits bras oscillants sur les extrémités dudit tube extérieur.

Les figures du dessin annexé feront bien comprendre comment l'invention peut être réalisée.

La figure 1 est une vue de dessus schématique d'une suspension du type de l'invention.

La figure 2 est une vue de côté schématique correspondant à la figure 1.

La figure 3 montre, en vue de dessus et en coupe, la moitié gauche d'une suspension conforme à l'invention, la moitié droite de la suspension étant identique et symétrique de cette moitié gauche.

La figure 4 montre à plus grande échelle le montage des bras de suspension sur le châssis du véhicule automobile, conformément à la présente invention.

Les figures 5 à 8 sont des coupes respectivement selon les lignes V-V, VI-VI, VII-VII et VIII-VIII de la figure 3.

Sur ces figures, des références identiques désignent des éléments semblables.

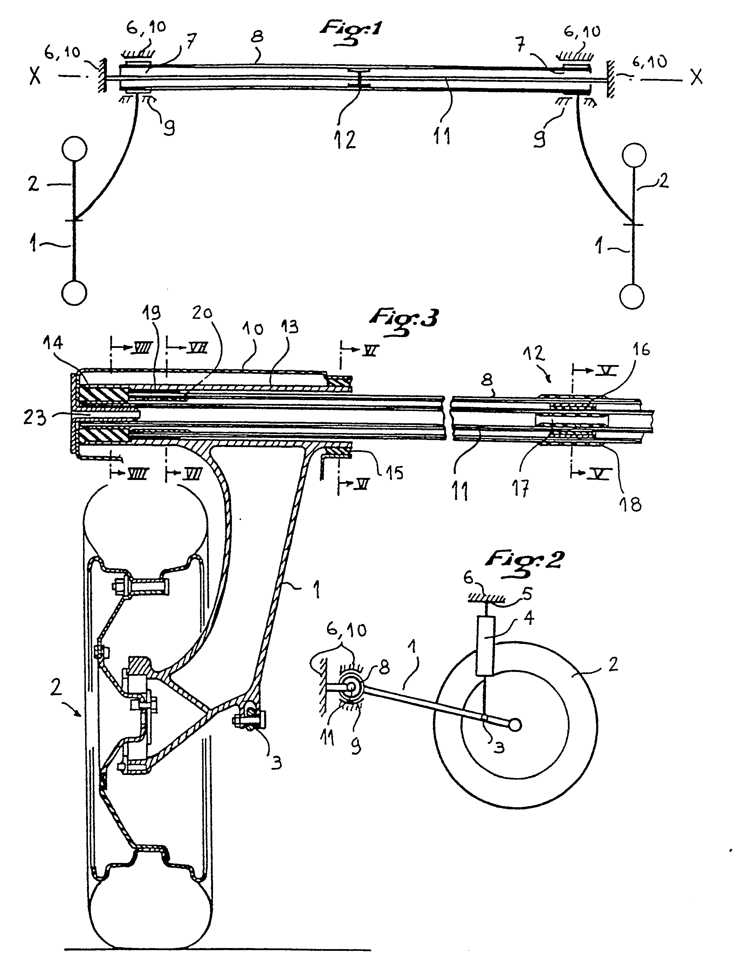

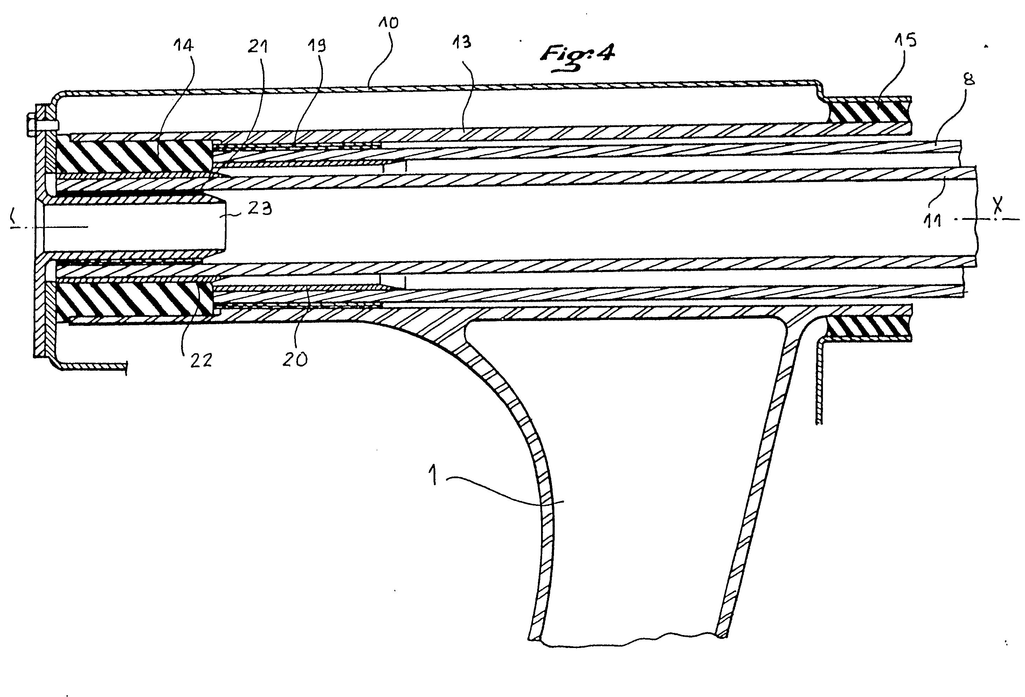

La suspension arrière pour véhicule à traction avant, montrée sur les figures 1 et 2, est du type à roue tirée et comporte des bras de suspension 1. Une extrémité de chaque bras 1 porte une roue 2, et ces bbras sont articulés en 3 à une extrémité d'un amortisseur télescopique hydraulique 4. L'autre extrémité de l'amortisseur 4 est articulée en 5 sur le châssis 6 du véhicule (non représenté). Eventuellement, si nécessaire, l'amortisseur 4 peut faire office de correcteur d'assiette.

Les extrémités des bras 1 opposées aux roues 2 sont respectivement rendues solidaires des extrémités 7 d'un tube 8 de matériau composite, dont l'axe définit l'axe X-X, transversal au véhicule, de débattement des roues 2. De plus, les extrémités 7 du tube 8 peuvent osciller autour de l'axe X-X (travail en torsion du tube 8) en étant guidées par des agencements de paliers 9. Ces agencements de paliers tourillonnent le tube 8, soit directement par rapport au châssis 6, soit par rapport à un étrier 10, lui-même monté oscillant (de façon non représentée, mais décrite dans la demande de brevet français N° 82.07909 déposée le 6 mai 1982 au nom de la demanderesse) par rapport au châssis 6.

Par ailleurs, à l'intérieur du tube 8 est disposé un autre tube 11 de matériau composite, dont les extrémités sont rendues solidaires soit du châssis 6, soit de l'étrier 10. Les tubes 8 et 11 sont rendus solidaires l'un de l'autre en 12, au voisinage de leur milieu.

Ainsi, on voit que la raideur verticale de la suspension (débattement vertical des roues 2) est assurée, pour chaque roue 2, par les moitiés de tubes 8 et 11, disposées vers la roue correspondante et liées l'une à l'autre en 12, alors que le couplage anti-roulis est assuré par le tube de torsion extérieur 8 reliant les deux bras de suspension 1. Eventuellement, la raideur longitudinale de la suspension est obtenue en ajustant la raideur d'oscillation des étriers 10, par rapport au châssis 6.

On notera que la suspension selon l'invention est auto-stabilisante, car des différents éléments ont toujours tendance à revenir dans leur position d'équilibre initiale.

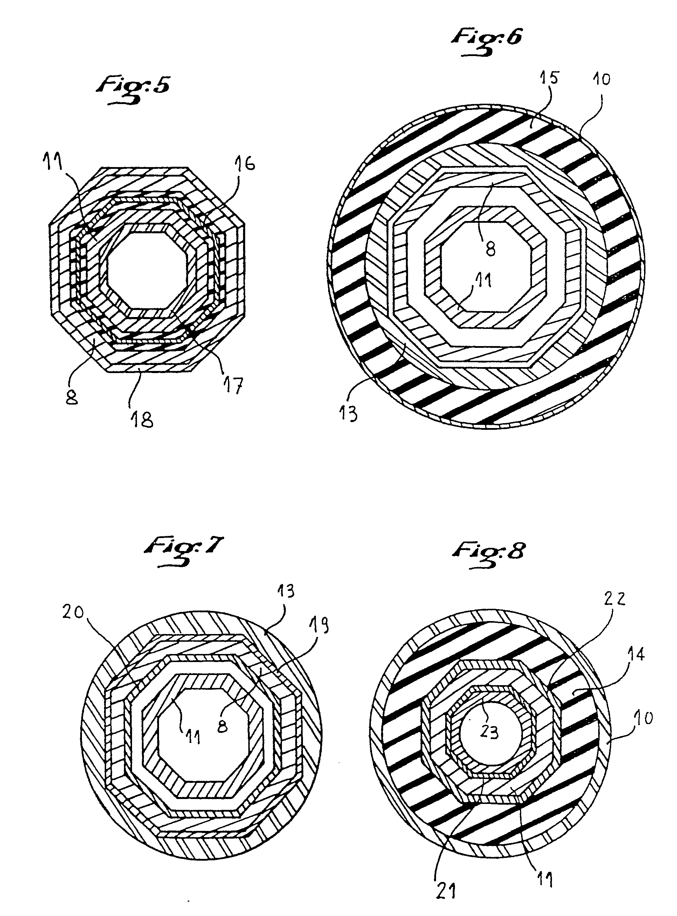

Dans le mode de réalisation montré par les figures 3 et 4, les bras 1 comportent chacun un manchon allongé 13 d'axe X-X, c'est-à-dire transversal auxdits bras, ledit manchon se trouvant du côté opposé à la roue 2 correspondante.

Aux deux extrémités d'un manchon 13 sont agencés des paliers 14 et 15 respectivement, reliant lesdits bras 1 à l'étrier 10 correspondant. Les paliers 14 et 15, dont l'axe est confondu avec l'axe X-X, sont de préférence du type lamifié et permettent donc la rotation des bras 1 autour dudit axe X-X.

Comme mentionné ci-dessus, les deux bras 1 de la suspension d'un train de deux roues 2 sont reliés l'un à l'autre par l'ensemble des deux tubes 8 et 11, concentriques l'un à l'autre et centrés sur l'axe X-X. Les deux tubes 8 et 11 sont réalisés en une matière composite constituée de fibres (de verre, de carbone, de bore, etc... ou d'un mélange de ces matières) enrobées d'une résine synthétique, par la mise en oeuvre de tout procédé connu (bobinage filamentaire, superposition de tresses, tissage, etc...) permettant d'obtenir pour lesdits tubes des valeurs élevées du rapport $\frac{R}{E}$, dans lequel R est la contrainte à la rupture et E le module d'élasticité. Les tubes 8 et 11 peuvent présenter une section polygonale, par exemple octogonale.

Les tubes 8 et 11 sont rendus solidaires l'un de l'autre en leur milieu 12, par exemple par collage avec interposition d'une bague intermédiaire 16. Des frettes métalliques interne (17) et externe (18) sont prévues pour renforcer la solidarisation desdits tubes 8 et 11 en 12.

Les extrémités des tubes 8 et 11 traversent les manchons 13 des deux bras 1 couplés.

Les extrémités du tube de torsion extérieur 8 sont rendues solidaires des manchons 13, et donc des bras 1, par collage avec interposition de bagues entretoises 19 en élastomère dur. Des frettes métalliques 20 de renforcement du tube 8 peuvent être prévues aux endroits des bagues entretoises 19.

Les extrémités du tube de torsion intérieur 11 sont rendues solidaires des étriers 10 par collage avec interposition de bagues entretoises 21 en élastomère dur. Des frettes métalliques 22 de renforcement du tube 11 peuvent être prévues aux endroits des bagues entretoises 21.

Dans le mode de réalisation montré par les figures 3 et 4, les paliers 15 sont disposés entre la paroi extérieure des manchons 13 et les étriers 10, alors que les paliers 14 sont agencés entre la paroi intérieure des manchons 13 et la paroi extérieure du tube interne 11. Dans ce cas, on prévoit des doigts 23, solidaires des étriers 10 et pénétrant en bout à l'intérieur du tube interne 11. Les bagues entretoises 21 sont alors disposées entre les doigts 23 et la paroi interne du tube 10 pour solidariser le tube 11 desdits doigts 23.

**Revendications**

1 - Suspension pour un train de deux roues (2) d'un véhicule comprenant deux bras (1) oscillant autour d'un axe X-X transversal audit véhicule et portant chacun l'une desdites roues (2), des moyens élastiques et des moyens amortisseurs étant associés auxdits bras (1) respectivement pour contrecarrer et amortir les mouvements verticaux desdites roues (2), et lesdits moyens élastiques comportant un ensemble de deux tubes concentriques (8 et 11) coaxiaux audit axe transversal X-X d'oscillation des bras, lesdits bras (1) étant solidaires des extrémités du tube extérieur (8) et lesdites extrémités du tube extérieur (8) pouvant tourner (14, 15) au moins de façon limitée autour dudit axe transversal X-X, caractérisée en ce que lesdits tubes (8 et 11) sont chacun réalisés d'un seul tenant en matière composite fibres-matière synthétique et sont solidaires l'un de l'autre (en 12) au voisinage du milieu de leur longueur, et en ce que le tube intérieur (11) est relié au châssis (6) du véhicule par ses deux extrémités.

2 - Suspension selon la revendication 1, caractérisée en ce que les extrémités du tube intérieur (11) sont ancrées dans le châssis (6) du véhicule, tandis que les extrémités du tube extérieur (8) sont tourillonnées par rapport audit châssis (6).

3 - Suspension selon la revendication 1, caractérisée en ce que les extrémités du tube intérieur (11) sont reliées au châssis (6) du véhicule par l'intermédiaire d'étriers (10) susceptibles de subir de légers déplacements oscillatoires de direction sensiblement parallèle à la direction longitudinale du véhicule, tandis que les extrémités du tube extérieur (8) sont tourillonnées dans lesdits étriers (10).

4 - Suspension selon l'une quelconque des revendications 1 à 3,
caractérisée en ce que chaque bras (1) comporte un manchon transversal (13) creux tourillonnant par rapport au châssis (6) du véhicule ou par rapport auxdits étriers (10) par l'intermédiaire de deux paliers (14 et 15) espacés le long dudit axe transversal (X-X) d'oscillation des bras et qui est traversé par l'une des extrémités dudit ensemble de tubes (8, 11), l'extrémité correspondante du tube extérieur (8) étant solidarisée dudit manchon (13).

5 - Suspension selon l'une quelconque des revendications précédentes,
caractérisée en ce que les solidarisations des tubes entre eux et des tubes (8, 11) avec le châssis (6) et/ou les étriers (10) sont obtenues par collage.

6 - Suspension selon la revendication 5, caractérisée en ce que des bagues (16, 19, 21) sont montées entre les éléments assemblés par collage.

7 - Système de rappel élastique et de couplage anti-roulis des deux roues (2) d'un train de roues d'un véhicule, équipé d'une suspension comprenant deux bras (1) oscillant autour d'un axe X-X transversal audit véhicule et portant chacun l'une desdites roues (2), ledit système comportant un ensemble de deux tubes concentriques (8 et 11) destinés à être montés coaxialement audit axe transversal X-X d'oscillation des bras de façon que lesdits bras (1) soient solidaires des extrémités du tube extérieur (8) et que lesdites extrémités du tube extérieur (8) puissent tourner (14, 15) au moins de façon limitée autour dudit axe transversal X-X,
caractérisé en ce que lesdits tubes (8 et 11) sont chacun réalisés d'un seul tenant en matière composite fibres-matière synthétique et sont solidaires l'un de l'autre (en 12) au voisinage du milieu de leur longueur.

8 - Système de rappel élastique selon la revendication 7, caractérisé en ce que les tubes extérieur (8) et intérieur (11) présentent une section polygonale.

**Patentansprüche**

1. Aufhängung für ein zweirädriges Fahrwerk (2) eines Fahrzeugs bestehend aus zwei Armen (1), die um eine transversal zum Fahrzeug verlaufende Achse X-X schwenkbar sind und jeweils eines der Räder (2) tragen, federnden und dämpfenden Einrichtungen, die den Armen (1) zum Entgegenwirken bzw. Dämpfen der vertikalen Bewegungen der Räder (2) zugeordnet sind, und aus federnden Einrichtungen, die einen Satz aus zwei konzentrischen Rohren (8 und 11) darstellen, die zur transversalen Schwingungsachse X-X der Arme (1) koaxial liegen, die an den Enden des äußeren Rohrs (8) befestigt sind, dessen Enden sich zumindest begrenztermaßen um die transversale Achse X-X drehen können (14, 15), dadurch gekennzeichnet, daß die Rohre (8 und 11) jeweils in einem Stück aus Kunstfaser-Verbundstoff gefertigt und (bei 12) in Nähe der Mitte ihrer Länge miteinander verbunden sind und daß das Innenrohr (11) mit seinen beiden Enden am Fahrzeugchassis (6) befestigt ist.

2. Aufhängung nach Anspruch 1, dadurch gekennzeichnet, daß die Enden des Innenrohrs (11) im Fahrzeugchassis (6) verankert sind, während die Enden des Aussenrohrs (8) gegenüber dem Chassis (6) drehbar gelagert sind.

3. Aufhängung nach Anspruch 1, dadurch gekennzeichnet, daß die Enden des Innenrohrs (11) mit Hilfe von Bügel (10), die allgemein parallel zur Längsrichtung des Fahrzeugs leichte pendelnde Richtungsverschiebungen durchführen können, am Fahrzeugschassis (6) befestigt sind, während die Enden des Aussenrohrs (8) in den Bügeln (10) drehbar gelagert sind.

4. Aufhängung nach einem der vorhergehenden Ansprüche 1 bis 3, dadurch gekennzeichnet, daß jeder Arm (1) eine transversale Hohlmuffe (13) aufweist, die gegenüber dem Fahrzeugchassis (6) oder gegenüber den Bügeln (10) mit Hilfe der beiden längs der transveralen Schwingachse (X - X) der Arme getrennt angeordneten Lager (14 und 15) drehbar gelagert ist und von einem der Enden des Rohrsatzes (8, 11) durchquert wird, wobei das entsprechende Ende des Aussenrohrs (8) mit der Muffe (13) verbunden ist.

5. Aufhängung nach einem der vorhergehenden Ansprüche 1 bis 4, dadurch gekennzeichnet, daß die Verbindungen der Rohre untereinander und der Rohre (8,11) mit dem Chassis (6) und/oder den Bügeln (10) durch Kleben hergestellt werden.

6. Aufhängung nach Anspruch 5, dadurch gekennzeichnet, daß Ringe (16, 19, 21) zwischen den durch Kleben zusammengefügten Teilen eingesetzt sind.

7. System der federnden Rückstellung und rollverhindernden Kopplung der beiden Räder (2) eines Fahrwerks mit einer Aufhängung aus zwei Armen (1), die um eine transversal zum Fahrzeug verlaufende X-X Achse hin- und herbeweglich sind und jeweils eines der Räder (2) tragen, und bestehend aus einem Satz von zwei konzentrischen Rohren (8 und 11), die koaxial zur transversalen Schwingachse X-X der Arme derart einzusetzen sind, daß die Arme (1) mit den Enden des Aussenrohrs (8) verbunden sind und daß sich die Enden des Aussenrohrs (8) zumindest begrenztermaßen um die transversale X - X Achse drehen können, dadurch gekennzeichnet, daß die Rohre (8 und 11) jeweils in einem Stück aus Kunstfaser-Verbundstoff gefertigt und (bei 12) in der Nähe der Mitte ihrer Länge miteinander verbunden sind.

8. System nach Anspruch 7, dadurch gekennzeichnet, daß das Aussen- und das Innenrohr (8 bzw. 11) einen polygonalen Querschnitt haben.

## Claims

1.- Suspension for a set of two wheels (2) of a vehicle comprising two arms (1) oscillating about an axis X-X transverse to said vehicle and each bearing one of said wheels (2), elastic means and damper means being associated with said arms (1) respectively to counteract and dampen the vertical movements of said wheels (2) and said elastic means comprising an assembly of two concentric tubes (8 and 11) coaxial to said transverse axis X-X about which the arms oscillate, said arms (1) being fast with the ends of the outer tube (8) and said ends of the outer tube (8) being rotatable (14, 15) at least in limited manner about said transverse axis X-X, characterized in that said tubes (8 and 11) are each made continuous of a composite fibre-synthetic resin material and are fast with each other (at 12) near the centre of their length, and in that the inner tube (11) is connected to the chassis (6) of the vehicle by its two ends.

2.- Suspension according to claim 1, characterized in that the ends of the inner tube (11) are anchored in the chassis (6) of the vehicle, whilst the ends of the outer tube (8) are journaled with respect to said chassis.

3.- Suspension according to claim 1, characterized in that the ends of the inner tube (11) are connected to the chassis (6) of the vehicle via stirrup elements (10) adapted to undergo slight oscillatory displacements of direction substantially parallel to the longitudinal direction of the vehicle, whilst the ends of the outer tube (8) are journaled in said stirrup elements (10).

4.- Suspension according to any one of claims 1 to 3, characterized in that each arm (1) comprises a hollow transverse sleeve (13) journaling with respect to the chassis (6) of the vehicle or with respect to said stirrup elements (10) via two bearings (14 and 15) spaced along said transverse axis X-X about which the arms oscillate and which sleeve is traversed by one of the ends of said tube assembly (8, 11) the corresponding end of the outer tube (8) being connected to said sleeve (13).

5.- Suspension according to any one of the preceding claims, characterized in that the connections of the tubes with each other and the tubes (8, 11) with the chassis (6) and/or the stirrup elements (10) are obtained by adhesion.

6.- Suspension according to claim 5, characterized in that rings (16, 19, 21) are mounted between the elements assembled by adhesion.

7.- System for elastic return and anti-roll coupling of the two wheels (2) of a set of wheels of a vehicle, equipped with a suspension comprising two arms (1) oscillating about an axis X-X transverse with respect to said vehicle and each bearing one of said wheels (2), said system comprising an assembly of two tubes (8 and 11), concentric to each other, adapted to be mounted coaxial to said transverse axis X-X about which the arms oscillate so that said arms (1) are fast with the ends of the outer tube (8) and that said ends of the outer tube (8) may rotate (14, 15) at least in limited manner about said transverse axis X-X, characterized in that said tubes (8 and 11) are each made continuous of a composite fibre-synthetic resin material and are fast with each other (at 12) near the centre of their length.

8.- System for elastic return according to claim 7, characterized in that the outer (8) and inner (11) tubes present a polygonal section.

*Fig.1*

*Fig.3*

*Fig.2*

*Fig.4*

0 097 540

Fig:5

Fig:6

Fig:7

Fig:8